# EUROPÄISCHE PATENTSCHRIFT

(11) **EP 1 912 773 B1**
(45) Veröffentlichungstag und Bekanntmachung des Hinweises auf die Patenterteilung: **22.06.2011**
(21) Anmeldenummer: 06764056.5
(22) Anmeldetag: 04.07.2006
(51) Int. Cl.: B29C 45/57, B29C 45/00, B29C 43/00, B29C 45/56

(54) **VERFAHREN, STEUERUNG FÜR EINE MASCHINE UND COMPUTERPROGRAMMPRODUKT ZUR STEUERUNG EINER MASCHINE ZUR HERSTELLUNG EINES FORMTEILS, INSBESONDERE SPRITZGIESSVERFAHREN**
METHOD, CONTROL FOR A MACHINE AND COMPUTER PROGRAM PRODUCT FOR CONTROLLING A MACHINE FOR PRODUCING A MOLDED ELEMENT, ESPECIALLY INJECTION MOLDING METHOD
PROCEDE, UNITE DE COMMANDE POUR UNE MACHINE, ET PRODUIT PROGRAMME D'ORDINATEUR POUR COMMANDER UNE MACHINE SERVANT A PRODUIRE UNE PIECE MOULEE, EN PARTICULIER PROCEDE DE MOULAGE PAR INJECTION

(30) Priorität: 03.08.2005 DE 102005037116
(43) Veröffentlichungstag der Anmeldung: 23.04.2008
(73) Patentinhaber: Kunststoff - Prof. Ehrenstein GbR, 91058 Erlangen-Tennenlohe (DE)
(72) Erfinder: EHRENSTEIN, Prof. Dr.-Ing. h.c. Gottfried W., 91058 Erlangen (DE)
(74) Vertreter: Richardt Patentanwälte
(86) Internationale Anmeldenummer: PCT/EP2006/063860
(87) Internationale Veröffentlichungsnummer: WO 2007/023013

(56) Entgegenhaltungen:
- EP-A- 1 482 062
- US-A- 4 563 324
- SCHINKOETHE W ET AL: "ZYKLUSZEITEN VERRINGEN EINE ALTERNATIVE WERKZEUGTEMPERIERUNG BEIM MIKROSPRITZGIESSEN" KUNSTSTOFFE, CARL HANSER VERLAG, MUNCHEN, DE, Bd. 90, Nr. 5, Mai 2000 (2000-05), Seiten 62-64,66,68, XP000947391 ISSN: 0023-5563

## Beschreibung

Die Erfindung betrifft ein Verfahren zur Herstellung eines Formteils, insbesondere ein Spritzgießverfahren, sowie eine Steuerung für eine Maschine zur Herstellung eines Formteils und ein Computerprogrammprodukt.

Zur Herstellung eines Spritzgussteils wird üblicherweise eine fließfähige Schmelze in ein Spritzgusswerkzeug transportiert, darin geformt und abgekühlt, um die Gestalt des Spritzgussteils durch Festwerden zu stabilisieren. Ein solches Spritzgussteil wird auch als Formteil bezeichnet.

Zur Herstellung eines Formteils können anstelle von Spritzgussverfahren auch andere Verfahren angewendet werden. Beispielsweise kann ein Klumpen der Schmelze in eine geöffnete Präge- oder Pressform eingebracht werden. Durch Zusammenfahren der Werkzeughälften der Präge- oder Pressform erhält das Formteil seine gewünschte Form. Solche Verfahren werden insbesondere für besonders kostengünstige Formteile, wie z.B. zur Herstellung von Verschlusskappen für Getränkeflaschen eingesetzt.

Im Allgemeinen erfolgt die Abkühlung der Schmelze durch Ableitung der Wärme über das Formwerkzeug, also z. B. das Spritzgusswerkzeug, Prägewerkzeug oder Presswerkzeug.

Problematisch kann dabei die Herstellung von dünnwandigen Teilen mit langen Fließwegen, das heißt, hohen Aspektverhältnissen, und Teilen mit mikrostrukturierten Oberflächen sein. In beiden Fällen besteht das Problem darin, dass die Schmelze beim Kontakt mit der kalten Kavitätswand des Spritzgusswerkzeugs schnell über den gesamten Querschnitt erstarrt und keine plastische Seele verbleibt, durch die weitere Masse in weiter entfernte Bereiche gelangen könnte. Unterhalb einer gewissen Querschnittsfläche dringt der Kunststoff bei konventioneller Temperierung des Spritzgusswerkzeugs, also vergleichsweise "kaltem" Spritzgußwerkzeug nicht mehr ein. Üblicherweise wird zum Beispiel angenommen, dass Spalte von weniger als 0,02 mm Breite an Auswerfern und Kavitätsfugen nicht gefüllt werden.

Ferner kann auch die Herstellung von dickwandigen Teilen mit zu hohen Anforderungen an die Oberflächenqualität problematisch sein. Hier stellen die widersprüchlichen Anforderungen während der Formfüllung und der Kühlzeit ein Problem dar. Um den beträchtlichen Wärmeinhalt des Spritzgussteils zügig abführen zu können, muss die Kavitätswand des Spritzgusswerkzeugs nach Abschluss des Einspritzvorgangs der Schmelze eine möglichst niedrige Temperatur haben und halten. Dickwandige Teile können zwar auch bei sehr niedriger Temperatur des Spritzgusswerkzeugs abgeformt werden, die Oberflächenqualität leidet aber dabei. Daher kommt ein dauerhaft niedriges Temperaturniveau nicht für Teile in Betracht, deren Funktion von der Oberflächenqualität bestimmt wird, wie zum Beispiel bei optischen Systemen, oder wenn ein hoher Wertigkeitseindruck angestrebt wird, wie zum Beispiel bei hochwertigen Verbrauchsgütern.

Zur Lösung dieser Probleme ist im Stand der Technik eine variotherme Temperierung des Spritzgusswerkzeugs vorgeschlagen worden (vgl. hierzu A. Weber, W. Schinköthe, "Vollständig integrierte induktive Beheizung und Impulskühlung von Spritzgießwerkzeugen", Beitrag zum 19. Stuttgarter Kunststoff Kolloquium, 9. bis 10. März 2005, Symposium 3, Kunststoffaufbereitung und -verarbeitung ; http://www.uni-stuttgart.de/ikff/institut/publikationen/pdf_data/Kolloq_2005_V12.pdf.)

Eine variotherme Temperierung des Spritzgusswerkzeugs erlaubt ein schnelles Aufheizen und Abkühlen. Das schnelle Aufheizen des Spritzgusswerkzeugs erfolgt beispielweise über eine induktive Erwärmung. Dabei gibt es verschiedene Varianten, die mit einem externen Induktor, einem integrierten Induktor, einem semi-integrierten Induktor oder voll-integriertem Induktor arbeiten.

Die schnelle Abkühlung des Spritzgusswerkzeugs erfolgt beispielsweise über eine Flüssigkeitskühlung, insbesondere eine sogenannte Impulskühlung. Bei der Impulskühlung erfolgt die Wärmeabfuhr nur während der Zeiten, in denen dieses durch den Wärmeeintrag erforderlich ist. Dies verhindert insbesondere bei hohen Kühlleistungen eine Abkühlung des Spritzgusswerkzeugs auf zu niedrige Temperaturen in Phasen geringen Wärmeeintrags.

Alternativ oder zusätzlich zur Flüssigkeitskühlung können auch andere Verfahren eingesetzt werden, wie zum Beispiel elektrothermische Verfahren, insbesondere Peltier-Elemente, Wärmerohre oder die Expansion von flüssigem Kohlendioxid.

Ein gemeinsamer Nachteil vorbekannter Verfahren zur Herstellung von Formteilen ist, dass die Erstarrung der Schmelze in dem Formwerkzeug aufgrund einer mehr oder weniger schnellen Abkühlung der Schmelze erfolgt. Dadurch tritt zwangsläufig ein Temperaturgefälle vom Formteil-Inneren zur Formteiloberfläche des Formteils auf. Während die Schmelze von ihrer Kontaktfläche mit dem Formwerkzeug her erstarrt, ist sie im Inneren noch flüssig.

Die Abkühlung und das Festwerden der Schmelze ist mit einer thermischen Kontraktion verbunden, die direkt proportional zur Temperaturdifferenz ist. Wegen des Temperaturgefälles im Formteilvolumen und des Temperatur und noch stärker Aggregatzustands-abhängigen Wärmeausdehnungskoeffizienten des Werkstoffs, sind unterschiedliche Schwindungen nicht zu vermeiden. Diese sind dann mit Eigenspannungen und Orientierungen der Makromoleküle innerhalb des Formteilwerkstoffs verbunden und für die Maßhaltigkeit negativ.

EP 1 482 062 A1 offenbart bereits ein Kokillengießverfahren und ein Schaumgießverfahren, sowie eine druckdichtverschließbare Gießform zur Herstellung von Formteilen. Die Erstarrung der Schmelze wird nicht wie sonst im Stand der Technik üblich aufgrund eines Abkühlungsprozesses eingeleitet, sondern durch eine Druckerhöhung des auf die Schmelze wirkenden Fluides.

Aus der US 4,563,324 ist ein Spritzgießverfahren bekannt, bei dem die Erstarrung der Schmelze ebenfalls aufgrund einer Druckerhöhung erfolgt.

Aus der US 2003/0111749 A1 ist ein Spritzgießverfahren zur Herstellung einer optischen Komponente aus einem thermoplastischen synthetischen Material bekannt. Bei diesem Verfahren wird die Wandung des Formwerkzeugs auf eine Temperatur oberhalb der Schmelztemperatur des eingespritzten Materials gebracht.

Der Erfindung liegt dem gegenüber die Aufgabe zu Grunde, ein verbessertes Verfahren zur Herstellung eines Formteils, insbesondere ein Spritzgießverfahren, sowie eine Steuerung für eine Maschine zur Herstellung eines Formteils und ein Computerprogrammprodukt zu schaffen.

Erfindungsgemäß wird diese Aufgabe mit den Merkmalen der unabhängigen Patentansprüche gelöst. Ausführungsformen der Erfindung sind in den abhängigen Patentansprüchen angegeben.

Erfindungsgemäß erfolgt die Erstarrung der Schmelze in einem Formwerkzeug nicht aufgrund einer mehr oder weniger schnellen Abkühlung der Schmelze, sondern durch eine Erhöhung des Drucks der Schmelze in dem Formwerkzeug. Durch eine geeignete Erhöhung des Drucks erfolgt bei einer bestimmten Temperatur der Schmelze ein Übergang von dem flüssigen in den festen Zustand. Durch die Erhöhung des Drucks erstarrt die Schmelze sofort im gesamten Formteilvolumen, da die Druckerhöhung sofort und überall im gesamten Formteilvolumen wirksam ist.

Im Unterschied zu einer allmählichen Erstarrung der Schmelze aufgrund deren Abkühlung, verfestigt sich die Schmelze aufgrund der Druckerhöhung sofort über ihr gesamtes Volumen. Aufgrund dessen können Verformungen, Orientierungen und Eigenspannungen nicht mehr auftreten. Dies macht die vorliegende Erfindung besonders geeignet zur Herstellung von Formteilen, bei denen eine besondere Anforderung an die Präzision und Maßhaltigkeit besteht, wie zum Beispiel optische Elemente, Linsen, Scheinwerfereinheiten, Kontaktlinsen, oder dergleichen, und Mikroteile.

Ein weiterer Vorteil ist, dass die erstarrte Kunststoffschmelze eine bessere Wärmeleitfähigkeit hat, als die flüssige Kunststoffschmelze. Aufgrund dessen kann das bereits erstarrte Formteil schneller über das Formwerkzeug abgekühlt werden.

Nach einer Ausführungsform der Erfindung erfolgt die Einbringung der Schmelze in das Formwerkzeug durch Kunststoffspritzguss. Bei dem Formwerkzeug handelt es sich in diesem Fall um ein Spitzgusswerkzeug.

Nach einer Ausführungsform der Erfindung wird die Schmelze in ein geöffnetes Formwerkzeug eingebracht. Beispielsweise wird ein entsprechend portionierter Klumpen der Schmelze in das geöffnete Formwerkzeug eingelegt und das Formwerkzeug danach zur Formung der Schmelze geschlossen. Bei dem Formwerkzeug kann es sich um eine Präge- und Pressform handeln. Der für die Erstarrung der Schmelze in dem Formwerkzeug erforderliche Druck kann über einen Stempel des Formwerkzeugs aufgebracht werden. Zur Erhöhung des Durchsatzes kann eine entsprechende Maschine mehrere Formwerkzeuge haben, in die jeweils eine Portion der Schmelze eingelagert wird, um sodann die Schmelze mit einem erhöhten Druck zur Verfestigung der Schmelze zu beaufschlagen.

Nach einer Ausführungsform der Erfindung wird die Temperatur der Schmelze in dem Formwerkzeug vor der Erhöhung des Drucks oberhalb einer Erstarrungstemperatur der Schmelze gehalten. Die Schmelze bleibt also vorzugsweise im gesamten Formteilvolumen flüssig. Die Erstarrung der Schmelze erfolgt anschließend nur aufgrund der Druckerhöhung, so dass die Erstarrung gleichmäßig, homogen und schnell erfolgt.

Das Material zur Herstellung des Formteils liegt im Inneren des Formwerkzeugs also jeweils immer nur in einer Phase vor. Die Abkühlung der erstarrten Schmelze erfolgt ausschließlich im festen Zustand. Dies hat den weiteren Vorteil, dass bei einer Erwärmung des Formteils bei einem späteren Gebrauch die thermische Ausdehnung des Formteils wegen Fehlens von Eigenspannungen und Orientierungen homogen und vorab abschätzbar ist.

Die Temperatur der Schmelze in dem Formwerkzeug vor der Erhöhung des Drucks, der zu einer Erstarrung der Schmelze führt, wird im wesentlichen konstant gehalten. Hierzu wird die Innenwandtemperatur des Formwerkzeugs im wesentlichen auf die Temperatur der in die Werkzeugkavität einzubringenden Schmelze gebracht, bevor die Schmelze z. B. eingespritzt wird. Erst nach der Druckerhöhung und der damit verbundenen Erstarrung der in das Formwerkzeug eingebrachten Schmelze, erfolgt die Abkühlung und damit die thermische Kontraktion des Formteils.

Nach einer weiteren Ausführungsform der Erfindung wird die Schmelze nach deren Einbringung in das Formwerkzeug auf eine Temperatur abgekühlt, bei der die Schmelze noch flüssig ist. Durch eine geeignete Temperierungsvorrichtung wird das Formwerkzeug so temperiert, dass diese Temperatur für eine definierte Zeit konstant gehalten wird, so dass sich eine homogene Temperaturverteilung in der Schmelze einstellt. Mit anderen Worten wird die Schmelze auf eine Temperatur abgekühlt, die unterhalb der Temperatur bei der Einbringung der Schmelze in das Formwerkzeug liegt, aber oberhalb einer Erstarrungstemperatur. Dies wird dadurch erreicht, dass das Formwerkzeug durch die Temperierungsvorrichtung auf eine bestimmte Temperatur gebracht wird, die für eine definierte Zeit konstant gehalten wird, so dass sich diese Temperatur überall in der Schmelze einstellt. Dies hat den Vorteil, dass bei einer nachfolgenden Druckerhöhung der Übergang flüssig-fest innerhalb der Schmelze gleichzeitig erfolgt, da überall dieselbe Temperatur vorliegt. Nach der Erstarrung der Schmelze erfolgt durch geeignete Ansteuerung der Temperierungsvorrichtung die weitere Abkühlung auf Entformungstemperatur, bei der das resultierende Formteil dem Formwerkzeug entnommen werden kann.

Nach einer Ausführungsform der Erfindung wird hierzu eine Temperierungsvorrichtung verwendet, bei der verschiedene Temperaturstufen einstellbar sind, und die für eine definierte Zeit gehalten werden, damit sich eine homogene Temperaturverteilung in der Schmelze bzw. dem Formteil einstellt. Nach einer Ausführungsform der Erfindung wird ein erhöhter Druck, der zu einer Erstarrung der Schmelze geführt hat, bis zur Abkühlung der erstarrten Schmelze auf eine Temperatur gehalten, bei der kein Übergang fest-flüssig erfolgen kann. Der erhöhte Druck muss also nicht bis zum vollständigen Abkühlen des Formteils in dem Formwerkzeug gehalten werden, sondern kann bereits bei einer noch relativ hohen materialabhängigen Temperatur von zum Beispiel 140 °C bis 145 °C abgebaut werden, bei der kein Übergang fest-flüssig erfolgen kann. Dies hat den Vorteil, dass sich der Durchsatz aufgrund der verkürzten Kühlzeit erhöhen und ein Werkzeugträgerkonzept mit mehreren Stationen realisieren lässt.

Nach einer Ausführungsform der Erfindung kann der Druck während der Abkühlung graduell verringert werden, wobei die Erstarrungslinie nicht überquert wird, das heißt ohne erneute Verflüssigung der erstarrten Schmelze. Der Druck muss also während der Abkühlung nicht konstant gehalten werden, sondern kann variieren oder sich langsam gleichmäßig ändern.

Nach einer Ausführungsform der Erfindung wird die Druckerhöhung, die zur Erstarrung der Schmelze in dem Formwerkzeug führt, durch Zusammenpressen des Formwerkzeugs erreicht, nachdem die Schmelze in das Formwerkzeug eingebracht worden ist. Das Zusammenpressen des Formwerkzeugs kann zum Beispiel durch einen mechanischen, hydraulischen oder elektrischen Antrieb erfolgen.

Nach einer Ausführungsform der Erfindung kann der erhöhte Druck durch die Einspritzvorrichtung erzeugt werden. Eine solche Einspritzvorrichtung hat üblicherweise einen Einspritzzylinder mit einer Schnecke und/oder einem separaten Kolben. Durch Festlegung einer Endposition des Kolbens bzw. der Schnecke bei einer vorgegebenen Menge von Schmelze, wird die fließfähige Schmelze aus dem Einspritzzylinder zunächst in das Spritzgusswerkzeug eingespritzt. Durch Weiterbewegung des Kolbens bzw. der Schnecke bis in die vorgegebene Endposition wird danach der Druck so erhöht, dass die in dem Spritzgusswerkzeug eingebrachte Schmelze schnell bis nahezu schlagartig erstarrt. Aufgrund der geringen Kompressibilität der Schmelze kann der zusätzliche Weg des Kolbens bzw. der Schnecke sehr kurz sein.

Nach einer Ausführungsform der Erfindung wird die Geschwindigkeit des Druckaufbaus, der zu dem Übergang flüssig-fest der Schmelze führt, gesteuert. Während des Druckaufbaus kommt es zu einer adiabatischen Erwärmung der Schmelze, die materialabhängig ist. Wenn für die Schmelze amorphe Werkstoffe eingesetzt werden, ist die adiabatische Erwärmung relativ gering, wohingegen z.B. bei teilkristallinen Thermoplasten aufgrund der bei der Kompression einsetzenden Strukturumwandlung deutlich mehr Energie/Wärme frei wird. Die Geschwindigkeit der Druckaufbringung muss also so gewählt werden, dass trotz der dadurch erfolgenden adiabatischen Erwärmung dennoch der gewünschte Übergang flüssig-fest erfolgt. Eine relativ langsame Druckaufbringung ist also bei solchen Werkstoffen erforderlich, bei denen eine starke adiabatische Erwärmung erfolgt, um zu verhindern, dass sich der Glaspunkt aufgrund der adiabatischen Erwärmung zu stark verschiebt.

Nach einer Ausführungsform der Erfindung erfolgt eine variotherme Temperierung des Spritzgusswerkzeugs. Beispielsweise wird das Spritzgusswerkzeug vor der Einbringung der Schmelze in das Spritzgusswerkzeug induktiv erwärmt. Nach der Erstarrung der Schmelze aufgrund der Druckerhöhung, erfolgt eine Kühlung des Spritzgusswerkzeugs, zum Beispiel durch Flüssigkeitskühlung.

Vorzugsweise handelt es sich bei der Flüssigkeitskühlung um eine Impuls- bzw. Variothermkühlung. Dabei erfolgt die Kühlung des Spritzgusswerkzeugs vorzugsweise nur solange, bis eine Temperatur erreicht ist, bei der sich die erstarrte Schmelze auch bei Atmosphärendruck nicht mehr verflüssigt. Bei dieser Temperatur kann das Formteil aus dem Spritzgusswerkzeug entnommen werden, um das Spritzgusswerkzeug für den nächsten Zyklus erneut aufzuheizen.

Nach einer Ausführungsform der Erfindung handelt es sich bei der Schmelze um einen plastifizierten Kunststoff mit oder ohne Glasfaser, Füllstoffen und mit oder ohne sonstigen Zusätzen. Der Kunststoff bzw. dessen Zusätze werden dabei je nach dem herzustellenden Formteil ausgewählt, das heißt beispielsweise zur Herstellung eines optischen Elements, insbesondere einer optischen Linse, einer Scheinwerfereinheit, einer Kontaktlinse oder dergleichen oder eines anderen Teils hoher Maßhaltigkeit oder eines Mikroteils. Insbesondere zur Herstellung optischer Elemente können Nanofüllstoffe vorteilhaft sein.

Nach einer Ausführungsform der Erfindung wird das Formwerkzeug nach der Einbringung der Schmelze von dem Zylinder getrennt. Beim Extrudieren großer Querschnitte (< 100 mm) ist in deren Inneren des Zylinders im allgemeinen Schmelze, die langsam erstarrt. Dadurch entstehen Eigenspannungen. Daher können solche Profile nur ganz langsam hergestellt werden. Wenn man schnell in ein Werkzeug extrudieren und durch die Schnecke einen hohen Druck erzeugen würde, bestände die Gefahr, daß die Druckerstarrung bis in den Zylinder mit der Schnecke erfolgt und die Schmelze druckabhängig fest eingebettet wird. Um dies zu vermeiden ist es vorteilhaft, die Schmelze im Zylinder von der mit Druck zu beaufschlagenden Schmelze im Werkzeug durch eine entsprechende Vorrichtung zu trennen. Die Druckbeaufschlagung im Werkzeug erfolgt bei dieser Ausführungsform dann getrennt oder zusätzlich. Nach der Trennung des Formwerkzeugs von dem Zylinder werden also der Druck und die Temperatur gehalten, so dass die Schmelze nicht erstarrt. Mit einer gesonderten Vorrichtung wird dann auf das Formwerkzeug die Druckerhöhung ausgeübt, so dass die Schmelze erstarrt. Dadurch wird sicher vermieden, dass auch die Schmelze im Zylinder erstarrt.

In einem weiteren Aspekt betrifft die Erfindung eine Steuerung für eine Maschine zur Herstellung eines Formteils, insbesondere für eine Spritzgießmaschine. Die Steuerung ist zur Abgabe einer Druckerhöhungssignals ausgebildet, so dass der Druck in der Schmelze in dem Formwerkzeug so erhöht wird, dass die Schmelze plötzlich erstarrt, und zwar aufgrund eines Übergangs über die Erstarrungslinie. Ferner ist die Steuerung zur Abgabe eines Kühlsignals ausgebildet, um die erstarrte Schmelze auf eine Temperatur abzukühlen, bei der das Formteil aus dem Formwerkzeug entnommen werden kann.

Nach einer Ausführungsform der Erfindung ist das Druckerhöhungssignal für einen mechanischen, hydraulischen oder elektrischen Antrieb vorgesehen, welcher das Formwerkzeug zur Druckerhöhung zusammenpresst.

Nach einer weiteren Ausführungsform ist das Druckerhöhungssignal für eine Einspritzvorrichtung vorgesehen, sodass die Einspritzvorrichtung nach dem Einspritzvorgang des plastifizierten Kunststoffs in die Kavität des Spritzgusswerkzeugs den Druck in der Schmelze so erhöht, dass die Schmelze erstarrt; dies kann so erfolgen, dass nach dem erfolgten Einspritzvorgang ein Kolben oder eine Schnecke der Einspritzvorrichtung bis zur Erreichung einer definierten Endposition weiter bewegt wird, so dass es zu der gewünschten Druckerhöhung und Erstarrung der Schmelze in der Kavität des Spritzgusswerkzeugs kommt.

Nach einer Ausführungsform der Erfindung dient die Steuerung zur Ansteuerung einer Temperierungsvorrichtung. Beispielsweise gibt die Steuerungsvorrichtung alternierend ein Kühlsignal und ein Erwärmungssignal für die Kühlung der erstarrten Schmelze in dem Spritzgusswerkzeug bzw. die anschließende Erwärmung des Spritzgusswerkzeugs vor dem nächsten Einspritzvorgang ab. Um den Durchsatz zu erhöhen kann auch ein Werkzeug mit mehreren Kavitäten oder ein Drehwerkzeug verwendet werden, so dass sich die für die Temperierung erforderlichen Zeiten reduzieren lassen.

In einem weiteren Aspekt betrifft die Erfindung ein Computerprogrammprodukt, insbesondere ein digitales Speichermedium, mit ausführbaren Instruktionen zur Steuerung und/oder Regelung einer Maschine zur Herstellung von Formteilen, insbesondere zur Steuerung einer Spritzgießmaschine. Durch das Computerprogramm wird ein geeignetes Aggregat z.B. der Spritzgießmaschine nach der Einbringung der Schmelze in das Spritzgusswerkzeug angesteuert, so dass der Druck in der Schmelze so erhöht wird, dass die Schmelze plötzlich erstarrt.

In einer Ausführungsform der Erfindung dient das Computerprogramm auch zur Ansteuerung einer Temperierungsvorrichtung der Spritzgießmaschine, um das Spritzgusswerkzeug vor dem Einspritzvorgang zu erwärmen und nach dem Einspritzvorgang und dem Erstarren der Schmelze so weit abzukühlen, dass das Formteil dem Spritzgusswerkzeug entnommen werden kann.

Im Weiteren werden bevorzugte Ausführungsformen der Erfindung mit Bezugnahme auf die Zeichnungen näher erläutert. Es zeigen:
- Figur 1: ein Blockdiagramm einer Spritzgießmaschine zur Durchführung einer Ausführungsform eines erfindungsgemäßen Spritzgießverfahrens,
- Figur 2: das Blockdiagramm der Figur 1 bei geschlossenem Spritzgusswerkzeug,
- Figur 3: ein Flussdiagramm einer Ausführungsform eines erfindungsgemäßen Spritzgießverfahrens,
- Figur 4: ein Druck-Volumen-Temperatur (pvT)-Diagramm eines Polycarbonats mit einer Darstellung einer Ausführungsform eines Zyklus eines erfindungsgemäßen Spritzgießverfahrens,
- Figur 5: ein Diagramm zur Darstellung der druckabhängigen Glaspunkte für verschiedene Kunststoffe.

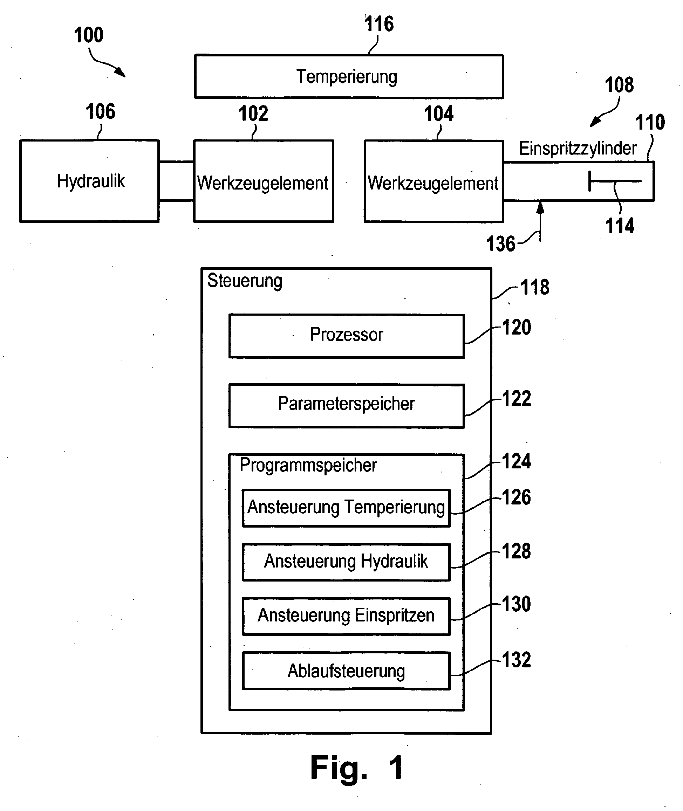

Die Figur 1 zeigt eine Spritzgießmaschine 100 in schematischer Darstellung. Die Spritzgießmaschine 100 hat ein Spritzgusswerkzeug, welches aus den beiden Werkzeug-Elementen 102 und 104 besteht. Das Werkzeugelement 104 ist feststehend und wird auch als "Formnest" bezeichnet; das Werkzeugelement 102 ist beweglich und wird auch als "Formstempel" bezeichnet. Die Figur 1 zeigt das Spritzgusswerkzeug in geöffnetem Zustand. In diesem Zustand kann ein zuvor hergestelltes Formteil aus dem Spritzgusswerkzeug entnommen werden.

Das Werkzeugelement 102 ist mit einem Antrieb 106 verbunden. Bei dem Antrieb 106 kann es sich beispielsweise um eine Hydraulik oder einen elektrischen Antrieb handeln. Der Antrieb 106 dient dazu, das Werkzeugelement 102 in Richtung auf das Werkzeugelement 104 zu verfahren, um das Spritzgusswerkzeug zu schließen, und um das Werkzeugelement 102 gegen das Werkzeugelement 104 zu pressen.

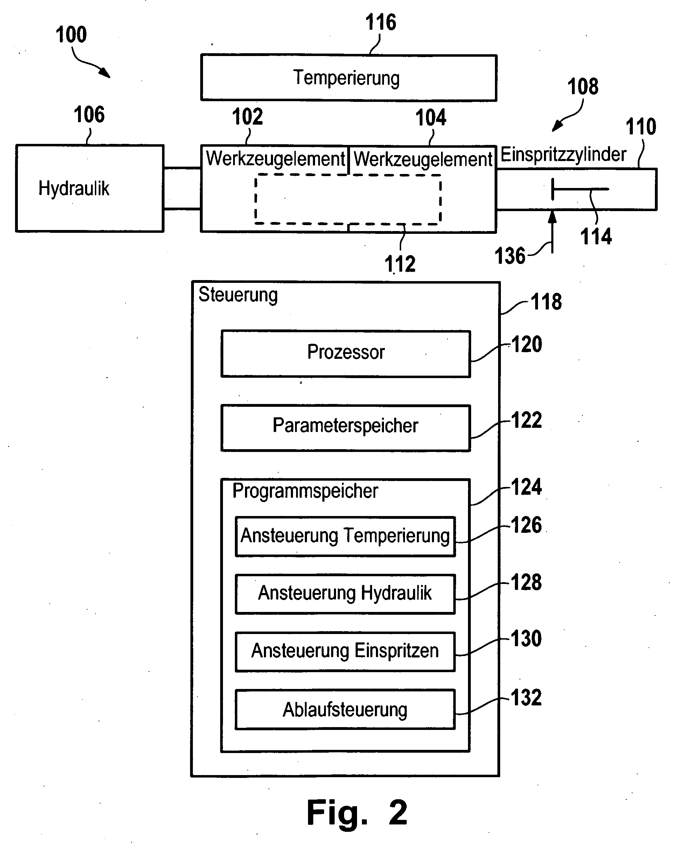

Das Werkzeugelement 104 ist mit einer Einspritzvorrichtung 108 gekoppelt. In dem hier betrachteten Ausführungsbeispiel hat die Einspritzvorrichtung 108 einen Einspritzzylinder 110, der gegenüber dem Werkzeugelement 104 geöffnet ist, so dass die in dem Einspritzzylinder 108 befindliche Schmelze bei geschlossenem Spritzgusswerkzeug in eine in dem Spritzgusswerkzeug dann gebildete Kavität 112 (vgl. Figur 2) eingespritzt werden kann. Zum Aufbau des hierzu erforderlichen Einspritzdrucks befindet sich in dem Einspritzzylinder 110 ein Kolben 114 oder eine entsprechende Vorrichtung, wie zum Beispiel eine Schnecke.

Die Spritzgießmaschine 100 hat ferner eine Temperierungsvorrichtung 116 zur Temperierung des Spritzgusswerkzeugs. Beispielsweise ist die Temperierungsvorrichtung 116 dazu ausgebildet, die Werkzeugelement 102, 104 des Spritzgusswerkzeugs induktiv zu erwärmen bzw. durch eine Flüssigkeitskühlung, insbesondere eine Impulskühlung, abzukühlen. Vorzugsweise ist die Temperierungsvorrichtung 116 für eine variotherme Temperierung des Spritzgusswerkzeugs ausgebildet.

Die Spritzgießmaschine 100 hat ferner eine Steuerung 118. Die Steuerung 118 hat zumindest einen Prozessor 120 zur Ausführung von Programminstruktionen, einen Speicher 122 zur Speicherung von Betriebsparametern der Spritzgießmaschine 100 sowie einen Programmspeicher 124 zur Speicherung von Programminstruktionen. Beispielsweise sind in dem Programmspeicher 124 ein Programmmodul 126 zur Ansteuerung der Temperierungsvorrichtung 116, ein Programmmodul 128 zur Ansteuerung des Antriebs 106, ein Programmmodul 130 zur Ansteuerung der Einspritzvorrichtung 108 und / oder ein Programmmodul 132 für die Gesamtablaufsteuerung gespeichert.

Zur Herstellung eines Formteils wird mit Hilfe des Programmmoduls 128 der Antrieb 106 so angesteuert, dass das Werkzeugelement 102 in Richtung auf das Werkzeugelement 104 bewegt wird, so dass das Spritzgusswerkzeug geschlossen wird und die beiden Werkzeugelemente 102, 104 gegeneinander gedrückt werden. Dadurch entsteht die Kavität 112 in dem aus dem Werkzeugelementen 102 und 104 gebildeten Spritzgusswerkzeug, wie in der Figur 2 dargestellt.

Die Werkzeugelemente 102, 104 werden durch die Temperierungsvorrichtung 116 erwärmt. Vorzugsweise erfolgt die Erwärmung in etwa auf die Temperatur der in die Kavität 112 einzuspritzenden Schmelze. Jedenfalls soll die Temperatur der Innenwandung der Kavität 112 mindestens so hoch sein, dass die in die Kavität 112 einzuspritzende Schmelze nicht bei Kontaktierung mit der Innenwand der Kavität 112 aufgrund des damit verbundenen Temperaturverlusts erstarrt.

Die gewünschte Temperatur, auf die das Spritzgusswerkzeug zu erwärmen ist, kann in dem Speicher 122 als ein Betriebsparameter abgelegt sein. Auf diesen greift das Programmmodul 126 für die Regelung der Temperierungsvorrichtung 116 zu.

Nach Erwärmung des Spritzgusswerkzeugs wird durch das Programmmodul 130 die Einspritzvorrichtung 108 angesteuert, so dass die in dem Einspritzzylinder 110 befindliche Schmelze in die Kavität 112 eingebracht wird. Die Schmelze ist zuvor durch eine geeignete Plastifiziereinheit (in den Figuren nicht dargestellt) erzeugt worden. Bei der Schmelze handelt es sich vorzugsweise um einen plastifizierten Kunststoff oder ein Gemisch aus verschiedenen plastifizierten Kunststoffen mit oder ohne verschiedenen Zusätzen, wie zum Beispiel Glasfaser, Brandschutz oder anderen Zusätzen.

Nach dem Einspritzen der Schmelze in die Kavität 112 ist diese vollständig von der Schmelze ausgefüllt. Die Einspritzvorrichtung 108 wird von dem Programmmodul 130 so angesteuert, dass der Druck nach dem eigentlichen Einspritzvorgang so erhöht wird, dass die Schmelze in der Kavität 112 erstarrt. Aufgrund der geringen Kompressibilität der in der Kavität 112 befindlichen Schmelze kann dies durch einen geringen weiteren Vorschub des Kolbens 114 bzw. der Schnecke erreicht werden.

Vorzugsweise wird nach dem Einspritzen der Schmelze in die Kavität 112 das Spritzgusswerkzeug durch die Temperierungsvorrichtung 116 für eine definierte Zeit von z. B. einigen Sekunden auf einer definierten Temperatur gehalten, so dass sich diese Temperatur überall in der Schmelze einstellt. Erst danach wird der Druck erhöht, so dass der Übergang flüssig-fest überall in der Schmelze gleichzeitig erfolgt.

Beispielsweise können der Einspritzvorgang und die nachfolgende Druckerhöhung so erfolgen, dass in den Einspritzzylinder 110 eine spezifizierte Menge der Schmelze eingebracht wird. Der Kolben 114 wird dann aufgrund der Ansteuerung der Einspritzvorrichtung 108 durch das Programmmodul 130 bis zu einer vorgegebenen Position 136 bewegt, so dass zunächst die Schmelze aus dem Einspritzzylinder 110 in die Kavität 112 eingespritzt wird und nach dem Füllen der Kavität 112 mit der Schmelze der Druck in der Schmelze so erhöht wird, dass die Schmelze erstarrt.

Alternativ kann die Druckerhöhung in der Schmelze durch Ansteuerung des Antriebs 106 durch das Programmmodul 128 erreicht werden. Der Antrieb 106 wird hierzu so angesteuert, dass der Anpressdruck der Werkzeugelemente 102, 104 gesteigert wird; aufgrund der Elastizität des Spritzgusswerkzeugs steigt aufgrund dessen der Druck in der Schmelze.

Vorzugsweise erfolgt die Steuerung der Druckerhöhung durch das Programmmodul 130 bzw. durch das Programmmodul 128 in Abhängigkeit eines Materialparameters der Schmelze, der in dem Parameterspeicher 122 abgelegt ist. Dieser Materialparameter gibt ein Maß für die adiabatische Erwärmung der Schmelze durch Kompression an. Je größer diese adiabatische Erwärmung ist, desto langsamer muss die Druckerhöhung erfolgen, so dass trotz der adiabatischen Erwärmung der gewünschte Übergang flüssig-fest stattfinden kann.

Nach dem Erstarren der Schmelze in der Kavität 112 durch die Druckerhöhung wird die Temperierungsvorrichtung 116 durch das Programmmodul 126 zur Kühlung des Spritzgusswerkzeugs angesteuert. Nach hinreichender Abkühlung wird der Antrieb 106 durch das Programmmodul 128 zur Öffnung des Spritzgusswerkzeugs angesteuert, so dass das in der Kavität 112 befindliche Formteil ausgeworfen wird.

Danach kann ein weiterer Herstellungszyklus zur Herstellung eines weiteren Formteils erfolgen, indem wiederum das Spritzgusswerkzeug geschlossen und temperiert wird, wonach die Schmelze eingespritzt wird, der Druck erhöht wird, etc. Die entsprechende Ablaufsteuerung und die Aufrufe der Programmmodule 126 bis 130 wird durch das Programmmodul 132 durchgeführt.

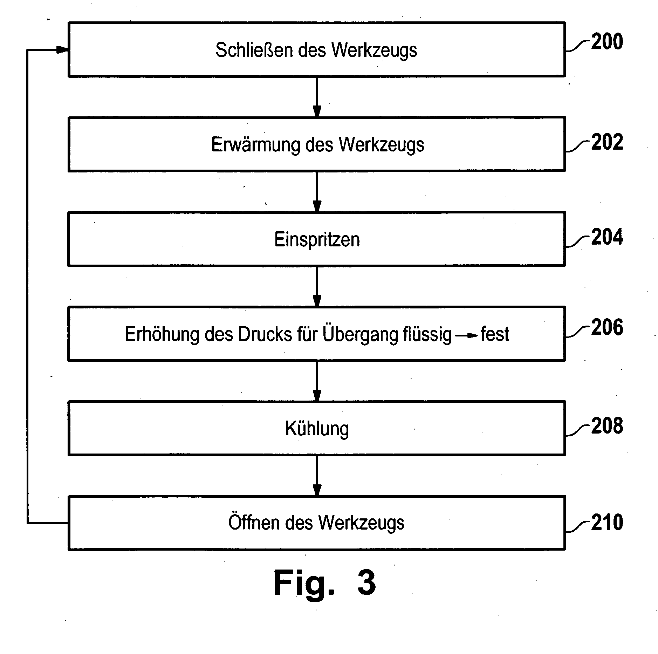

Die Figur 3 zeigt ein entsprechendes Flussdiagramm. In dem Schritt 200 wird das Spritzgusswerkzeug geschlossen und erwärmt (Schritt 202). Vorzugsweise erfolgt die Erwärmung auf eine Temperatur, die im wesentlichen der Temperatur der später einzuspritzenden Schmelze entspricht. Die Temperatur, auf die das Spritzgusswerkzeug aufgeheizt wird, soll aber mindestens so hoch sein, dass die Schmelze bei Kontakt mit der Kavitäts-Innenwand nicht aufgrund des damit verbundenen Temperaturverlusts erstarrt.

In dem Schritt 204 wird die Schmelze in das Spritzgusswerkzeug eingespritzt. In dem Schritt 206 wird der Druck in dem Spritzgusswerkzeug so erhöht, dass die Schmelze in dem Spritzgusswerkzeug erstarrt. Dabei soll die Temperatur der Schmelze in dem Zeitraum zwischen dem Schritt 204 und dem Schritt 206 nirgendwo innerhalb des Formteilvolumens unterhalb einer Erstarrungstemperatur der Schmelze abfallen, so dass die Schmelze in dem Schritt 206 allein aufgrund der Druckerhöhung erstarrt.

In dem Schritt 208 wird die erstarrte Schmelze gekühlt, vorzugsweise durch Kühlung des Spritzgusswerkzeugs. Nachdem das Formteil hinreichend abgekühlt ist, wird das Werkzeug in dem Schritt 210 geöffnet, so dass das Formteil ausgeworfen wird. Danach geht die Ablaufsteuerung zu dem Schritt 200 zurück, so dass nachfolgend ein weiteres Formteil hergestellt wird.

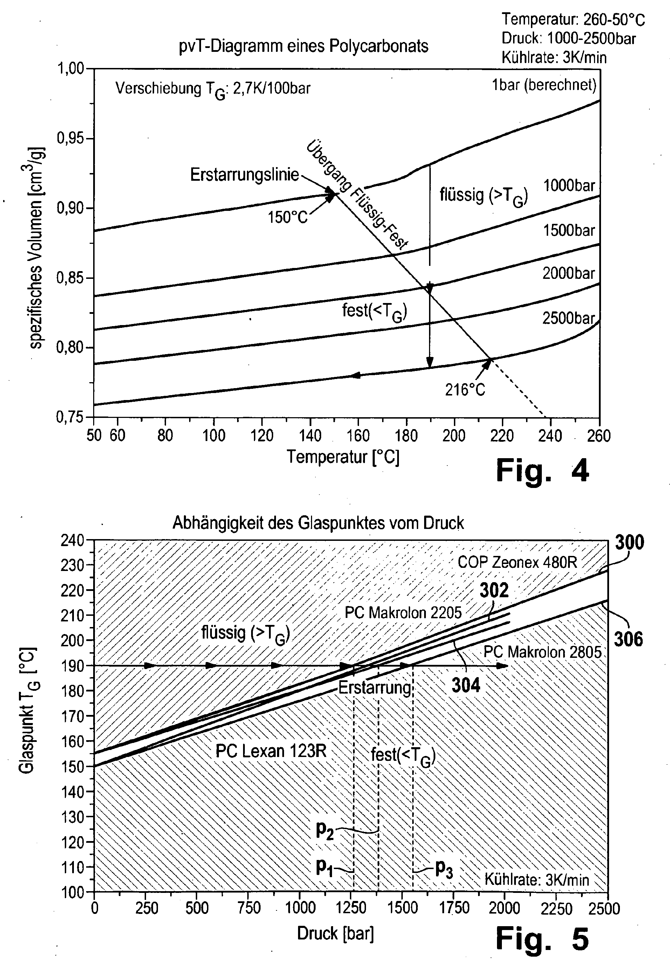

Die Figur 4 zeigt ein Druck-Volumen-Temperatur (pvT)-Diagramm eines Polycarbonats. Bei Atmosphärendruck liegt die sogenannte Glasübergangstemperatur des Polycarbonats bei ca. 150 °C. Die Glasübergangstemperatur bezeichnet dabei diejenige Temperatur, bei der das Polycarbonat bei einem bestimmten Druck von der flüssigen in die feste Phase übergeht. In dem hier betrachteten Beispielsfall steigt diese Glasübergangstemperatur je 1000 Bar Druckerhöhung um gut 20 °C. Daraus ergibt sich die in der Figur 4 dargestellte Erstarrungslinie des Polycarbonats. Beispielsweise wird eine Schmelze des Polycarbonats einer Temperatur von ca. 190 °C in die Kavität des Spritzgusswerkzeugs eingespritzt. Dabei steigt der Druck in der Schmelze an, bis die Erstarrungslinie überschritten wird. In dem hier betrachteten Beispielsfall wird dabei die Temperatur der Schmelze durch entsprechende Temperierung des Spritzgusswerkzeugs im wesentlichen konstant gehalten.

Der Druck in der Schmelze wird dabei zum Beispiel bis auf 2500 Bar erhöht, so dass die Schmelze aufgrund der Überschreitung der Erstarrungslinie erstarrt. Die erstarrte Schmelze wird dann unter Aufrechterhaltung des Drucks von 2500 Bar abgekühlt. Dabei ist eine Abkühlung auf eine Temperatur, die unter der Glasübergangstemperatur bei Atmosphärendruck liegt, ausreichend, da bei einer solchen Temperatur kein Übergang von der festen in die flüssige Phase mehr erfolgen kann. In dem hier betrachteten Beispielsfall wird also die erstarrte Schmelze auf z.B. 145 °C abgekühlt und dann das Spritzgusswerkzeug zum Auswurf des resultierenden Formteils geöffnet.

Es ist jedoch keinesfalls wesentlich, dass der Druck während der Abkühlung unverändert erhalten bleibt. Vielmehr ist es auch möglich, dass der Druck während der Abkühlung graduell abgebaut wird, bis die erstarrte Schmelze unterhalb der Glasübergangstemperatur bei Atmosphärendruck abgekühlt ist. Wesentlich ist dabei nur, dass während des Abkühlungsvorgangs kein erneuter Übergang von der festen in die flüssige Phase, d.h. keine Überschreitung der Erstarrungslinie, stattfindet.

Die Figur 5 zeigt die Abhängigkeit der Glasübergangstemperatur, die auch als Glaspunkt bezeichnet wird, in Abhängigkeit des Drucks der Schmelze. Die in der Figur 4 gezeigte Erstarrungslinie 300 für den Kunststoff COP Zeonex 480R, die Erstarrungslinie 302 für den Kunststoff PC Macrolon 2205, die Erstarrungslinie 304 für den Kunststoff PC Macrolon 2805 und die Erstarrungslinie 306 für den Kunststoff PC Lexan 123 R wurden messtechnisch ermittelt.

Aus der Figur 5 ergibt sich für die verschiedenen Kunststoffe jeweils der Mindestdruck, der in der Schmelze aufgebaut werden muss, damit diese bei einer vorgegebenen Temperatur ohne Abkühlung erstarrt. Bei einer Verarbeitungstemperatur der Schmelze von zum Beispiel 190 °C ist dies für COP Zeonex 480 R ein Druck P₁ von ca. 1260 Bar, für PC Macrolon 2205 und PC Macrolon 2805 ein Druck P₂ von ca. 1390 Bar und für PC Lexan 123 R ein Druck P₃ von ca. 1560 Bar.

### Bezugszeichenliste

- 100: Spritzgießmaschine
- 102: Werkzeugelement
- 104: Werkzeugelement
- 106: Antrieb
- 108: Einspritzvorrichtung
- 110: Einspritzzylinder
- 112: Kavität
- 114: Kolben
- 116: Temperierungsvorrichtung
- 118: Steuerung
- 120: Prozessor
- 122: Speicher
- 124: Programmspeicher
- 126: Programmmodul
- 128: Programmmodul
- 130: Programmmodul
- 132: Programmmodul
- 134: Programmmodul
- 136: Position
- 300: Erstarrungslinie
- 302: Erstarrungslinie
- 304: Erstarrungslinie
- 306: Erstarrungslinie

## Patentansprüche

1. Verfahren zur Herstellung eines Formteils mit folgenden Schritten:
- Einbringung einer Schmelze in ein Formwerkzeug (102, 104),
- Erhöhung des Drucks der Schmelze, so dass die Schmelze erstarrt,
- Abkühlung der erstarrten Schmelze,
wobei das Formwerkzeug vor Einbringung der Schmelze erwärmt wird, so dass die Temperatur der Schmelze in dem Formwerkzeug vor der Erhöhung des Drucks oberhalb der Erstarrungstemperatur der Schmelze gehalten wird, und so dass die Erstarrung der Schmelze nur aufgrund der Druckerhöhung erfolgt.

2. Verfahren nach Anspruch 1, wobei die Temperatur der Schmelze vor der Erhöhung des Drucks oberhalb einer Erstarrungstemperatur der Schmelze gehalten wird.

3. Verfahren nach Anspruch 1 oder 2, wobei die Temperatur der Schmelze vor der Erhöhung des Drucks im Wesentlichen konstant bleibt.

4. Verfahren nach Anspruch 1, 2 oder 3, wobei der erhöhte Druck bis zur Abkühlung der erstarrten Schmelze auf eine Temperatur, bei der die Schmelze bei Atmosphärendruck erstarrt bleibt, aufrecht erhalten wird.

5. Verfahren nach einem der vorhergehenden Ansprüche, wobei die Abkühlung der erstarrten Schmelze bei einem Druck erfolgt, so dass sich die erstarrte Schmelze während der Abkühlung nicht verflüssigt.

6. Verfahren nach einem der vorhergehenden Ansprüche, wobei die Erhöhung des Drucks der Schmelze durch Zusammenpressen des Formwerkzeug erfolgt.

7. Verfahren nach einem der vorhergehenden Ansprüche, wobei das Formwerkzeug nach der Erstarrung der Schmelze gekühlt wird.

8. Verfahren nach einem der vorhergehenden Ansprüche, wobei es sich um ein Spitzgießverfahren handelt und wobei es sich bei dem Formwerkzeug um ein Spitzgusswerkzeug handelt.

9. Verfahren nach einem der vorhergehenden Ansprüche, wobei es sich bei dem Formwerkzeug um eine Präge- oder Pressform handelt.

10. Steuerung für eine Maschine (100) zur Herstellung eines Formteils mit
- Mitteln zur Abgabe eines Erwärmungssignals (126) zur Erwärmung des Formwerkzeugs vor Einbringung der Schmelze, so dass die Temperatur der Schmelze in dem Formwerkzeug vor der Erhöhung des Drucks oberhalb der Erstarrungstemperatur der Schmelze gehalten wird,
- Mitteln (128; 130) zur Abgabe eines Druckerhöhungssignals zur Erhöhung des Drucks der Schmelze in einem Formwerkzeug (102, 104) der Maschine, so dass die Schmelze nur aufgrund der Druckerhöhung erstarrt,
- Mitteln (126) zur Abgabe eines Kühlsignals zur Reduzierung der Temperatur der erstarrten Schmelze,
**gekennzeichnet durch**
- einen Speicher (122), wobei in dem Speicher ein Materialparameter der Schmelze abgelegt ist, der ein Mass für die adiabatische Erwärmung der Schmelze **durch** Kompression angibt, wobei die Mittel zur Abgabe eines Druckerhöhungssignal so ausgebildet sind, dass die Druckerhöhung um so langsamer stattfindet, je größer diese adiabatische Erwärmung ist, so dass trotz der adiabatischen Erwärmung die Schmelze erstarrt..

11. Steuerung nach Anspruch 10, wobei das Druckerhöhungssignal zur Ansteuerung eines Antriebs (106) zum Zusammenpressen des Formwerkzeugs vorgesehen ist.

12. Steuerung nach Anspruch 11, wobei das Druckerhöhungssignal zur Ansteuerung eines mechanischen, hydraulischen oder elektrischen Antriebs vorgesehen ist.

13. Steuerung nach Anspruch 10, 11 oder 12, wobei das Druckerhöhungssignal zur Ansteuerung einer Einspritzvorrichtung (108) zur Erhöhung des Drucks der bereits in das Formwerkzeug eingebrachten Schmelze vorgesehen ist.

14. Steuerung nach einem der vorhergehenden Ansprüche 10 bis 13, wobei das Kühlsignal zur Ansteuerung einer Temperierungsvorrichtung (116) des Formwerkzeugs vorgesehen ist.

15. Computerprogrammprodukt, insbesondere digitales Speichermedium, zur Steuerung einer Maschine zur Herstellung eines Formteils, mit Computer ausführbaren Instruktionen (126, 128, 130, 132) zur Durchführung der folgenden Schritte:
- Zugriff auf einen Speicher (122) zur Speicherung von Betriebsparametern der Maschine (100), wobei eine gewünschte Temperatur, auf die ein Formwerkzeug zu erwärmen ist, als ein Betriebsparameter in dem Speicher abgelegt ist,
- Abgabe eines Erwärmungssignals (126) zur Erwärmung des Formwerkzeugs (102, 104) vor Einbringung der Schmelze auf die gewünschte Temperatur, so dass die Temperatur der Schmelze in dem Formwerkzeug vor der Erhöhung des Drucks oberhalb der Erstarrungstemperatur der Schmelze gehalten wird,
- Abgabe eines Druckerhöhungssignals zur Erhöhung des Drucks der Schmelze in dem Formwerkzeug (102, 104) der Maschine, so dass die Schmelze nur aufgrund der Druckerhöhung erstarrt,
- Abgabe eines Kühlsignals zur Abkühlung des Formwerkzeugs, nachdem die in das Formwerkzeug eingebrachte Schmelze aufgrund der Druckerhöhung erstarrt ist,
wobei in dem Speicher (122) ein Materialparameter der Schmelze abgelegt ist, der ein Mass für die adiabatische Erwärmung der Schmelze durch Kompression angibt, wobei das Druckerhöhungssignal so ausgebildet ist, dass die Druckerhöhung um so langsamer stattfindet, je größer diese adiabatische Erwärmung ist, so dass trotz der adiabatischen Erwärmung die Schmelze erstarrt.

## Claims

1. Method for producing a moulded part with the following steps:
- introducing a melt into a mould (102, 104),
- increasing the pressure of the melt, so that the melt solidifies,
- cooling the solidified melt,
the mould being heated before introduction of the melt, so that the temperature of the melt in the mould before the increase in pressure is kept above the solidification temperature of the melt, and so that the solidification of the melt only takes place on the basis of the pressure increase.

2. Method according to Claim 1, the temperature of the melt before the increase in pressure being kept above a solidification temperature of the melt.

3. Method according to Claim 1 or 2, the temperature of the melt before the increase in pressure remaining substantially constant.

4. Method according to Claim 1, 2 or 3, the increased pressure being maintained until the solidified melt has cooled down to a temperature at which the melt remains solidified under atmospheric pressure.

5. Method according to one of the preceding claims, the cooling of the solidified melt taking place under a pressure, so that the solidified melt does not liquefy during the cooling.

6. Method according to one of the preceding claims, the increase in the pressure of the melt taking place by compressing the mould.

7. Method according to one of the preceding claims, the mould being cooled after the solidification of the melt.

8. Method according to one of the preceding claims, the method comprising an injection-moulding method and the mould comprising an injection mould.

9. Method according to one of the preceding claims, the mould comprising a stamping mould or a compression mould.

10. Control for a machine (100) for producing a moulded part, with
- means for issuing a heating signal (126) for heating up the mould before introduction of the melt, so that the temperature of the melt in the mould before the increase in pressure is kept above the solidification temperature of the melt,
- means (128; 130) for issuing a pressure increase signal for increasing the pressure of the melt in a mould (102, 104) of the machine, so that the melt only solidifies on the basis of the pressure increase,
- means (126) for issuing a cooling signal for reducing the temperature of the solidified melt,
**characterized by**
- a memory (122), a material parameter of the melt that indicates a measure of the adiabatic heating of the melt by compression being stored in the memory, the means for issuing a pressure increase signal being formed in such a way that the pressure increase takes place all the more slowly the greater this adiabatic heating is, so that the melt solidifies in spite of the adiabatic heating.

11. Control according to Claim 10, the pressure increase signal being intended for activating a drive (106) for compressing the mould.

12. Control according to Claim 11, the pressure increase signal being intended for activating a mechanical, hydraulic or electrical drive.

13. Control according to Claim 10, 11 or 12, the pressure increase signal being intended, for activating an injection device (108) for increasing the pressure of the melt already introduced into the mould.

14. Control according to one of the preceding Claims 10 to 13, the cooling signal being intended for activating a temperature-control device (116) of the mould.

15. Computer program product, in particular a digital storage medium, for controlling a machine for producing a moulded part, with computer-executable instructions (126, 128, 130, 132) for carrying out the following steps:
- accessing a memory (122) for storing operating parameters of the machine (100), a desired temperature to which a mould is to be heated being stored as an operating parameter in the memory,
- issuing a heating signal (126) for heating the mould (102, 104) to the desired temperature before introduction of the melt, so that the temperature of the melt in the mould before the increase in pressure is kept above the solidification temperature of the melt,
- issuing a pressure increase signal for increasing the pressure of the melt in the mould (102, 104) of the machine, so that the melt only solidifies on the basis of the pressure increase,
- issuing a cooling signal for cooling the mould once the melt introduced into the mould has solidified on the basis of the pressure increase,
a material parameter of the melt that indicates a measure of the adiabatic heating of the melt by compression being stored in the memory (122), the pressure increase signal being formed in such a way that the pressure increase takes place all the more slowly the greater this adiabatic heating is, so that the melt solidifies in spite of the adiabatic heating.

## Revendications

1. Procédé de production d'une pièce moulée, comprenant les étapes suivantes:
- introduction d'un bain fondu dans un outil de moulage (102, 104),
- augmentation de la pression du bain fondu, de telle manière que le bain fondu se solidifie,
- refroidissement du bain fondu solidifié,
dans lequel on chauffe l'outil de moulage avant l'introduction du bain fondu, de telle marnière que la température du bain fondu dans l'outil de moulage soit maintenue au-dessus de la température de solidification du bain fondu avant l'augmentation de la pression, et de telle manière que la solidification du bain fondu ne se produise que sous l'effet de l'augmentation de la pression.

2. Procédé selon la revendication 1, dans lequel on maintient la température du bain fondu au-dessus d'une température de solidification du bain fondu avant l'augmentation de la pression.

3. Procédé selon la revendication 1 ou 2, dans lequel la température du bain fondu reste essentiellement constante avant l'augmentation de la pression.

4. Procédé selon la revendication 1, 2 ou 3, dans lequel on maintient la pression accrue jusqu'au refroidissement du bain fondu solidifié à une température laquelle le bain fondu reste solidifié à la pression atmosphérique.

5. Procédé selon l'une quelconque des revendications précédentes, dans lequel on effectue le refroidissement du bain fondu solidifié à une pression telle que le bain fondu solidifié ne se liquéfie pas pendant le refroidissement.

6. Procédé selon l'une quelconque des revendications précédentes, dans lequel on effectue l'augmentation de la pression du bain fondu par compression de l'outil de moulage.

7. Procédé selon l'une quelconque des revendications précédentes, dans lequel on refroidit l'outil de moulage après la solidification du bain fondu.

8. Procédé selon l'une quelconque des revendications précédentes, dans lequel le procédé est un procédé de moulage par injection, et dans lequel l'outil de moulage est un outil de moulage par injection.

9. Procédé selon l'une quelconque des revendications précédentes, dans lequel l'outil de moulage est un moule de marquage ou un moule de moulage par pression.

10. Unité de commande pour une machine (100) de production d'une pièce moulée, comportant
- des moyens pour émettre un signal de chauffage (126) pour le chauffage de l'outil de moulage avant l'introduction du bain fondu, de telle manière que la température du bain fondu dans l'outil de moulage soit maintenue au-dessus de la température de solidification du bain fondu avant l'augmentation de la pression,
- des moyens (128; 130) pour émettre un signal d'augmentation de la pression pour l'augmentation de la pression du bain fondu dans un outil de moulage (102, 104) de la machine, de telle manière que le bain fondu ne se solidifie que sous l'action de l'augmentation de la pression,
- des moyens (126) pour émettre un signal de refroidissement pour la diminution de la température du bain fondu solidifié,
**caractérisée par**
- une mémoire (122), dans laquelle un paramètre de la matière du bain fondu est stocké dans la mémoire, lequel fournit une mesure pour le chauffage adiabatique du bain fondu par compression, dans laquelle les moyens pour émettre un signal d'augmentation de la pression sont réalisés de telle manière que l'augmentation de la pression se produise d'autant plus lentement que ce chauffage adiabatique est plus important, de telle manière que le bain fondu se solidifie malgré le chauffage adiabatique.

11. Unité de commande selon la revendication 10, dans laquelle le signal d'augmentation de la pression est prévu pour activer un entraînement (106) destiné à comprimer l'outil de moulage.

12. Unité de commande selon la revendication 11, dans laquelle le signal d'augmentation de la pression est prévu pour activer un entraînement mécanique, hydraulique ou électrique.

13. Unité de commande selon la revendication 10, 11 ou 12, dans laquelle le signal d'augmentation de la pression est prévu pour activer un dispositif d'injection (108) destiné augmenter la pression du bain fondu déjà introduit dans l'outil de moulage.

14. Unité de commande selon l'une quelconque des revendications précédentes 10 à 13, dans laquelle le signal de refroidissement est prévu pour activer un dispositif d'équilibrage de la température (116) de l'outil de moulage.

15. Produit de programme d'ordinateur, en particulier support de mémoire numérique, pour la commande d'une machine de production d'une pièce moulée, avec des instructions (126, 128, 130, 132) exécutables par un ordinateur pour l'exécution des étapes suivantes:
- accès à une mémoire (122) pour le stockage de paramètres de fonctionnement de la machine (100), dans lequel une température souhaitée, à laquelle un outil de moulage doit être chauffé, est stockée dans la mémoire comme paramètre de fonctionnement,
- émission d'un signal de chauffage (126) pour le chauffage de l'outil de moulage (102, 104) à la température souhaitée avant l'introduction du bain fondu, de telle manière que la température du bain fondu dans l'outil de moulage soit maintenue au-dessus de la température de solidification du bain fondu avant l'augmentation de la pression,
- émission d'un signal d'augmentation de la pression pour l'augmentation de la pression du bain fondu dans l'outil de moulage (102, 104) de la machine, de telle manière que le bain fondu ne se solidifie que sous l'action de l'augmentation de la pression,
- émission d'un signal de refroidissement pour le refroidissement de l'outil de moulage, après que le bain fondu introduit dans l'outil de moulage se soit solidifié sous l'action de l'augmentation de la pression,
dans lequel un paramètre de la matière du bain fondu est stocké dans la mémoire (122), lequel fournit une mesure pour le chauffage adiabatique du bain fondu par compression, dans lequel le signal d'augmentation de la pression est réalisé de telle manière que l'augmentation de la pression se produise d'autant plus lentement que ce chauffage adiabatique est plus important, de telle manière que le bain fondu se solidifie malgré le chauffage adiabatique.
